Europäisches Patentamt

**European Patent Office**

Office européen des brevets

(19)

(11) Numéro de publication: **0 246 167**
**A1**

(12) # DEMANDE DE BREVET EUROPEEN

(21) Numéro de dépôt: **87401107.5**

(22) Date de dépôt: **15.05.87**

(51) Int. Cl.³: **B 29 B 15/12**
**B 05 D 7/20**

(30) Priorité: **15.05.86 FR 8606990**

(43) Date de publication de la demande:
**19.11.87 Bulletin 87/47**

(84) Etats contractants désignés:
**AT BE CH DE ES FR GB IT LI NL SE**

(71) Demandeur: **INSTITUT NATIONAL DE RECHERCHE CHIMIQUE APPLIQUEE**
**18 Bis, Boulevard de la Bastille**
**F-75012 Paris(FR)**

(72) Inventeur: **Chauvelier, Claude**
**6 Route de Boutigny Vayres sur Essonne**
**F-91280 Boutigny(FR)**

(72) Inventeur: **Charles, Alain**
**18 rue René Damous**
**F-94500 Champigny sur Marne(FR)**

(72) Inventeur: **Morel, Emile**
**60 rue de Fécamp**
**F-75012 Paris(FR)**

(74) Mandataire: **Santarelli, Marc et al,**
**Cabinet Rinuy et Santarelli 14, avenue de la Grande Armée**
**F-75017 Paris(FR)**

(54) Procédé d'imprégnation en continu de fibres de nature organique, minérale ou métallique par des produits à l'état solide, pulvérulent en suspension dans un gaz et installation pour sa mise en oeuvre.

(57) Ce procédé consiste à faire passer ces fibres en continu dans un aérosol, éventuellement en mouvement, à concentration en particules ou microparticules globalement constante desdits produits polymériques pulvérulents dans un gaz, ce passage étant suivi d'un traitement thermique et d'une opération de façonnage.

L'installation pour la mise en oeuvre de ce procédé comprend une enceinte (1) comportant les moyens d'admission (3-9) d'une suspension du type aérosol de polymères à partir d'un générateur d'aérosol (2) alimenté en air comprimé (4) et un moyen de circulation des fibres (10) dans cette enceinte.

Fig.1

EP 0 246 167 A1

"Procédé d'imprégnation en continu de fibres de nature organique, minérale ou métallique par des produits à l'état solide, pulvérulent, en suspension dans un gaz et installation pour sa mise en oeuvre".

La présente invention concerne un procédé d'imprégnation en continu de fibres de grande longueur de nature organique, minérale ou métallique par des produits polymériques à l'état solide pulvérulent.

Dans la présente invention, on entend par "fibres de grande longueur" tous produits se présentant sous forme de fils, filaments, mèches et analogues de grande longueur. De même, on entend par produits polymériques tous polymères, qu'ils soient du type thermodurcissable ou thermoplastique chargé ou non et se présentant à l'état solide pulvérulent.

On sait déjà imprégner en continu des fibres par différentes techniques telles que :

- passage de la fibre dans le polymère à l'état fondu ;

- passage de la fibre dans une solution ou une suspension liquide contenant le polymère ;

- passage de la fibre dans une suspension du polymère en poudre dans un gaz.

De telles opérations sont alors suivies d'un traitement thermique amenant le polymère dans un état permettant la pénétration de ce dernier au sein de la fibre et les opérations de façonnage telles que le moulage.

Or, les deux premières techniques présentent au moins l'un des inconvénients suivants, en particulier lorsque le polymère est thermoplastique :

- gainage irrégulier et non homogène de la fibre conduisant ultérieurement, lors du traitement thermique, à une imprégnation irrégulière et non homogène et, par conséquent, à des propriétés médiocres surtout au vieillissement ;

- nécessité de l'élimination du liquide ayant servi à la mise en solution ou en suspension du polymère, cette élimination ne pouvant se faire qu'avec des dispositifs de chauffe appropriés associés aussi éventuellement à des dispositifs de récupération, voire de recyclage ;

difficulté de se débarrasser des traces résiduelles de liquide et formation de pores qui sont nuisibles à une bonne adhérence entre fibres et matrice polymérique et donc à de bonnes propriétés mécaniques ;

- contrôle délicat du rapport des poids ou des volumes respectifs de polymère et de fibres. Or un tel contrôle est déterminant dans la maîtrise d'un procédé d'imprégnation de fibres en continu.

La technique d'imprégnation par passage de la fibre dans une suspension de polymère en poudre dans un gaz doit être séparée en deux catégories selon la nature de la suspension :

- aérosols,

- lits fluidisés.

Ces deux formes de suspensions où des particules ou des microparticules de poudre se trouvent momentanément dispersées dans un continuum gazeux possèdent des caractéristiques propres. Entre autres, le lit fluidisé présente une surface supérieure horizontale comme un liquide dans un récipient. La concentration d'un lit fluidisé par rapport au volume qu'il occupe n'a pas de sens comme pour un liquide, contrairement à un aérosol.

Ainsi, on peut dire qu'un aérosol est à un lit fluidisé ce que la vapeur est à un liquide.

L'imprégnation de fibres en lit fluidisé présente les mêmes inconvénients quant au contrôle du rapport pondéral ou volumique de polymère emporté par les fibres que l'imprégnation en suspension liquide. Ce rapport étant fonction séparément ou simultanément :

- de la durée d'immersion dans la solution, la suspension liquide ou le lit fluidisé ;

- de la concentration de la solution ou de la suspension liquide ;

- de l'efficacité du dispositif utilisé pour l'élimination de l'excès de polymère emporté.

Lorsqu'il faut faire varier la durée d'immersion, c'est, en général :

- la géométrie de la trajectoire de la fibre dans le milieu d'imprégnation qui doit être modifiée si l'on ne change pas sa vitesse de passage. Le maintien constant du rapport dépend de l'homogénéité et de la concentration en polymère du milieu d'imprégnation et du maintien de celles-ci. La création d'un lit fluidisé est théoriquement possible avec toutes les poudres, mais se heurte à des difficultés pratiques :

- certains polymères en poudre très fine et mottants comme les résines phénoliques novolaques se fluidisent très mal,

- les polymères en poudre qui ont subi un traitement par un liquide ou sont additionnés de quelques pourcents de liquide (ce qui est d'usage courant avec les thermodurcissables en poudre) ne peuvent être fluidisés ou mis en suspension liquide ou en solution.

En revanche, ces poudres difficiles à fluidiser peuvent être mises en suspension aérosol sans modification de la formulation ou de la granulométrie initiale.

Lorsque le milieu d'imprégnation est une suspension aérosol, le rapport volumique ou pondéral de polymère emporté et de fibres est déterminé par la concentration de poudre de polymère dans l'enceinte où a lieu l'imprégnation pour une vitesse et une configuration données. Les procédés connus utilisant une suspension aérosol comme milieu d'imprégnation proposent des dispositifs de réglage de la concentration qui permettent ainsi d'agir sur la quantité de polymère emportée par la fibre. Tous ces procédés exigent un étalonnage qui relie la concentration globale dans l'enceinte d'imprégnation de la suspension aérosol et le rapport polymère emporté-fibres. Cet étalonnage doit être refait à chaque changement de type de fibres ou de polymère et selon les conditions de capture. Parmi ces procédés d'imprégnation en milieu aérosol qui exigent cet étalonnage, il faut citer ceux qui génèrent la suspension aérosol par aspiration dans un lit fluidisé bien distinct du milieu d'imprégnation. Le recyclage de la partie d'aérosol non captée vers le lit fluidisé n'exclut pas la nécessité de l'étalonnage.

La présente invention propose un procédé d'imprégnation obviant à ces inconvénients, notamment à ces contrôles a posteriori en utilisant, comme milieu d'imprégnation, un aérosol dont la concentration s'adapte automatiquement pour maintenir le rapport volumique ou pondéral de polymère emporté et de fibres à la valeur préalablement choisie, de façon à ce que, dans la même unité de temps, la fibre emporte autant de polymère que l'enceinte d'imprégnation en reçoit.

En ne préjugeant pas des mécanismes de capture sur lesquels il est par ailleurs possible d'agir sans modifier le procédé d'adaptation automatique de la concentration, le milieu d'imprégnation qui est contenu dans une enceinte traversée par la fibre reçoit juste la quantité nécessaire de poudre de polymère pour obtenir, à la vitesse de passage de la fibre choisie, le rapport pondéral ou volumique de polymère et de fibre désiré.

La partie de polymère non captée par la fibre est récupérée et réintroduite sous forme d'aérosol dans l'enceinte. Cette partie de poudre s'ajoutant à celle normalement introduite augmente la concentration de la suspension aérosol. L'augmentation de la concentration dans l'enceinte permet une capture plus abondante des particules ou microparticules par les fibres, si bien que la quantité de polymère emportée augmente. Il s'établit alors un équilibre dynamique suivant lequel la concentration s'adapte automatiquement de façon à ce que, dans la même unité de temps, la fibre emporte autant de polymère que l'enceinte en reçoit normalement. Cette adaptation automatique de la concentration qui élimine la nécessité d'un étalonnage est indépendante de la nature de la fibre et/ou du polymère.

Le procédé selon l'invention, comme tous les autres procédés d'imprégnation, présente une limite fixée par la quantité maximale que la fibre peut emporter, le dépassement de cette limite se traduisant dans le procédé selon l'invention par un engorgement soit au niveau de la concentration dans l'enceinte, soit au niveau de la réintroduction de la poudre sous forme d'aérosol dans l'enceinte.

Suivant d'autres caractéristiques :

- le milieu gazeux est l'air ;

- la poudre polymérique est constituée de particules ou microparticules ayant une dimension de 5 à 250 micromètres.

L'invention vise également toute installation mettant en oeuvre le procédé ci-dessus.

Suivant la caractéristique principale d'une telle installation, celle-ci comprend une enceinte dans laquelle est généré ou introduit un aérosol de particules ou microparticules, des moyens pour introduire ou générer dans cette enceinte un tel aérosol et des moyens pour admettre les microparticules ou particules dans le générateur d'aérosol et des moyens pour adapter la concentration de la suspension aérosol de milieu d'imprégnation.

Suivant un mode de réalisation avantageux :

- l'enceinte affecte la forme d'un tube que les fibres traversent au moins une fois sur toute sa longueur ;

- l'enceinte comporte des moyens pour collecter les particules ou microparticules non captées et les recycler aux moyens d'admission de ces dernières dans le générateur d'aérosol ou directement sous forme d'aérosol dans l'enceinte ;

- l'adaptation de la concentration de la suspension aérosol du milieu d'imprégnation est obtenue en déplaçant par un courant gazeux l'aérosol vers un dispositif de séparation tel qu'un élutriateur ou un cyclone et en réinjectant sous forme d'aérosol la poudre récupérée par le dispositif de séparation dans le milieu d'imprégnation.

D'autres caractéristiques et les avantages de l'invention ressortiront plus clairement de la description qui va suivre faite en regard des figures annexées sur lesquelles :

- la figure 1 illustre schématiquement un mode de mise en oeuvre possible selon l'invention ;

- les figures 2, 3 et 4 illustrent trois variantes de dispositifs pour la mise en oeuvre du procédé selon l'invention.

Ainsi, conformément à l'invention, on crée, dans le volume gazeux d'une enceinte, un aérosol de particules ou de microparticules solides d'une substance polymérique pulvérulente ; ladite enceinte est traversée par les fibres vierges à traiter, lesquelles ressortent en entraînant avec elles lesdites particules ou microparticules solides. Les particules non captées sont recyclées sous forme d'aérosol.

A cet effet, on peut créer un courant d'air ou de gaz dans l'enceinte qui dirige la fraction non captée vers un dispositif classique de séparation comme un cyclone ou analogue. La poudre de polymère récupérée est alors immédiatement renvoyée par tout système approprié (gravité, bande transporteuse, vibration, etc.) aux moyens d'admission servant à la formation de la suspension.

Les particules ou microparticules de substance polymérique ainsi recyclées s'ajoutent alors à celles admises normalement, augmentant de la sorte la concentration globale de produit dans l'enceinte. Une telle augmentation de concentration permet donc une capture plus abondante des particules ou microparticules par les fibres, si bien que la quantité de polymère emportée augmente. Il s'établit alors un équilibre dynamique suivant lequel, dans la même unité de temps, la fibre emporte autant de polymère que l'installation en reçoit.

Le Demandeur ne préjuge pas de la nature des mécanismes de capture par les fibres, de la poudre de substance polymérique en suspension dans le milieu gazeux. Il est certain que les forces électrostatiques y jouent un rôle important. La différence de charges électrostatiques entre les particules et les fibres favorise la capture : la maîtrise de ces charges, même si elle n'est pas indispensable à l'invention, autorise une conception plus ramassée de l'enceinte et régularise le fonctionnement en assurant la stabilité de la production. Cette maîtrise accessoire a été obtenue en chargeant ou déchargeant la poudre ou les fibres. La décharge est obtenue par passage devant une source radioactive comme le Kr86 tandis que la charge est obtenue par bombardement par des petits ions chargés d'un seul signe ou encore par effet couronne.

L'utilisation du procédé selon l'invention pour imprégner en continu des fibres présente les avantages suivants :

- la quantité de polymère emportée par la fibre dans une installation donnée est déterminée par la quantité de polymère apportée à l'installation et non par le temps de séjour, la vitesse ou la longueur de parcours. Le taux pondéral de renfort par rapport à la matrice polymérique est en général compris entre 20 et 90 % ;

- le vecteur d'imprégnation est le plus souvent de l'air éventuellement séché. A l'encontre des dispositifs connus d'imprégnation en suspension ou en solution, il n'est pas nécessaire de prévoir un étage de séchage, de récupération ou de recyclage du liquide après l'imprégnation ;

- certains polymères en poudres très fines et mottants comme les résines phénoliques solides sont pratiquement influidisables mais peuvent être mis sous forme d'aérosols ;

- les polymères en poudre qui ont subi un traitement par un liquide ou additionnés de quelques pourcents de liquide (ce qui est d'un usage courant avec les thermodurcissables en poudre) ne peuvent être fluidisés ou mis en solution ou en suspension ; en revanche, il est possible de les mettre sous forme d'aérosol sans modifier la formulation initiale.

Le dispositif d'imprégnation par cette voie, comme tout dispositif d'imprégnation, s'inscrit dans une ligne de production de produits finis ou de semi-produits dont elle ne constitue qu'une étape. De telles lignes comprennent des dévidoirs de fibres, le dispositif d'imprégnation lui-même, des fours, des filières, des conformateurs et autres éléments nécessaires appropriés.

Les semi-produits et les produits finis produits sur de telles lignes et utilisant au niveau de l'imprégnation le procédé selon l'invention peuvent être à matrice thermoplastique, thermodurcissable ou mixte ; ils peuvent être renforcés par toutes fibres organiques et minérales disposées de façon unidirectionnelle ou avec des ajouts de renforts transversaux. Le taux pondéral de renfort par rapport à la matrice dans les produits finis ou les semi-produits peut atteindre quelques pourcents, mais, en général, ne descend pas au-dessous de 20 % et ne monte pas au-delà de 90 %.

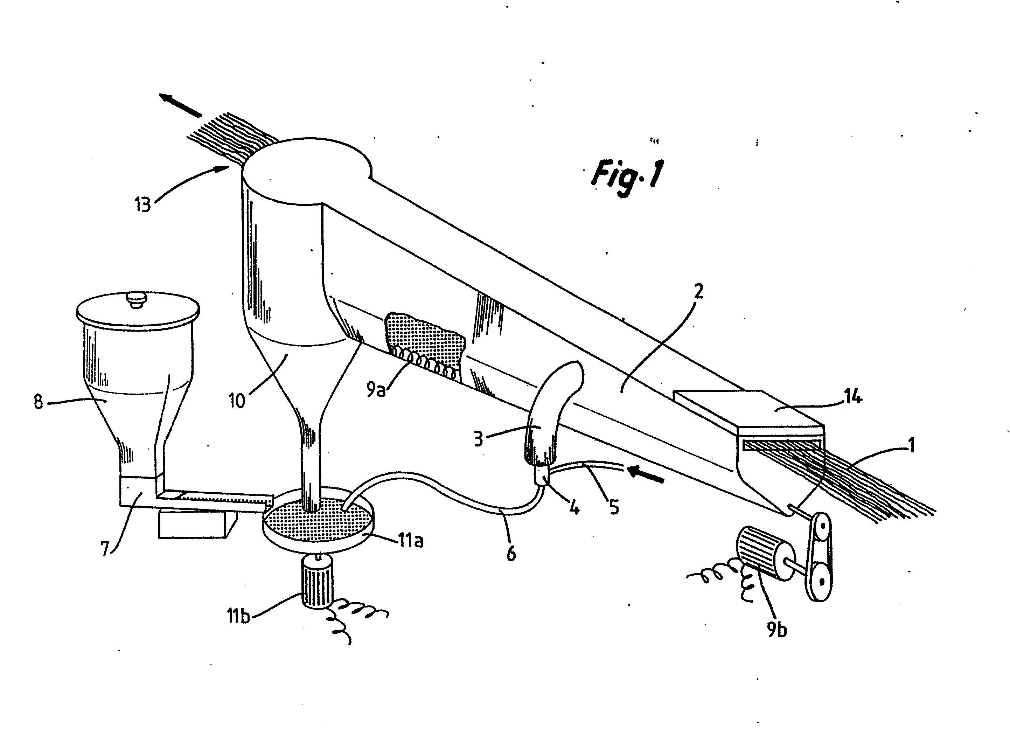

En se référant aux schémas représentés à la figure 1 d'une installation mettant en oeuvre le procédé de l'invention, les éléments représentés à titre d'exemple sur ce schéma sont :

- une enceinte tubulaire 2 dans laquelle est introduite par le tube 3 la suspension de type aérosol de polymère à partir d'un générateur pneumatique 4 d'aérosol alimenté en air comprimé par le tuyau 5 ;

- les fibres 1 qui passent devant la source radioactive 14 (ayant une action sur la charge électrostatique de ces fibres) pénètrent et sortent de l'enceinte (en 13) par de petites fenêtres (non représentées) ;

- les microparticules en suspension qui sédimentent sont récupérées par la vis d'Archimède 9a visible pour les besoins du dessin dans la partie ajourée et son moteur d'entraînement 9b. La poudre est envoyée vers l'élutriateur 10 ;

- les particules non captées par les fibres tombent dans l'élutriateur 10 ;

- glissant sur les parois de l'élutriateur 10, la poudre tombe dans une coupelle tournante 11a (moteur d'entraînement 11b) ;

- le polymère 7 alimentant l'installation est dosé par la trémie vibrante 8 pour tomber dans la coupelle 11a ;

- le générateur d'aérosol 4 par l'intermédiaire du tuyau 6 aspire tout le polymère contenu dans la coupelle 11a à mesure qu'elle tourne ;

- les fibres ressortent imprégnées par les fenêtres 13 avant d'entrer dans un four où elles subiront les traitements thermiques nécessaires à leur transformation, mais ne faisant pas partie de l'invention.

Une autre variante d'installation consiste à introduire directement l'aérosol en un point quelconque de l'enceinte 2 ou à le générer en un point quelconque de cette enceinte, ce qui rend alors inutile le tuyau 3.

Dans une autre variante, on pourra contrôler la charge de l'aérosol par une source radioactive, non représentée, placée dans un tuyau 3 par exemple et remplacer le dispositif 14 par un dispositif de création de petits ions pour charger à volonté la fibre.

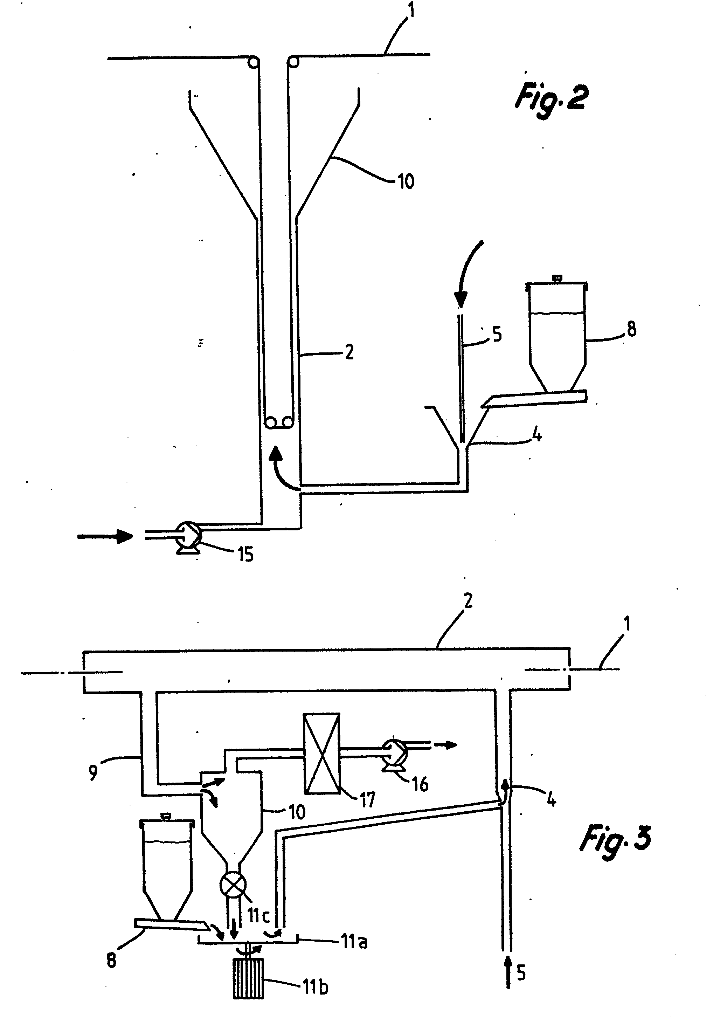

Dans la variante représentée sur la figure 2, la fibre 1 ou la nappe de fibres traverse l'enceinte d'imprégnation 2 qui est un tube vertical grâce à un jeu de renvois.

L'enceinte 2 est balayée par de l'air apporté par le ventilateur 15. La poudre de polymère est injectée sous forme d'aérosol à la base de l'enceinte 2 grâce à un injecteur pneumatique 4. Cet injecteur 4 est fait d'un entonnoir dans lequel la poudre de polymère est amenée par la balance doseuse 8. Une buse 5 souffle de l'air comprimé dans le fond de l'entonnoir ; le venturi ainsi constitué agit comme une trompe à air. L'enceinte 2 est surmontée d'un élutriateur 10 où la vitesse de l'air chute considérablement permettant l'élutriation. Les dimensions de l'élutriateur sont calculées à partir de la dimension et de la densité de la plus fine particule de la poudre de polymère et du débit d'air circulant dans l'enceinte d'imprégnation 2.

La partie de la suspension aérosol non captée par la fibre 1 qui atteint l'élutriateur 10 se dépose sous forme de poudre sur les parois internes de l'élutriateur et retourne par gravité à l'enceinte 2 où le courant d'air la remet en suspension, augmentant ainsi la concentration globale de la suspension dans l'enceinte 2. La concentration augmente jusqu'à ce que la fibre 1 emporte autant de polymère que la balance doseuse 8 via l'injecteur 4 en apporte à l'enceinte d'imprégnation 2. L'engorgement de l'injecteur 4 signifie que la fibre 1 ne peut emporter la quantité de poudre apportée à l'enceinte 2 par la balance doseuse 8.

Dans la variante représentée à la figure 3, la fibre ou nappe de fibres 1 traverse l'enceinte d'imprégnation 2 qui est un tube horizontal. La trompe à air 4 alimentée en air comprimé par la tubulure 5 aspire la poudre de polymère déposée sur le plateau tournant 11a et l'introduit sous forme d'aérosol dans l'enceinte 2. Le plateau 11a qui tourne grâce au moteur 11b est alimenté en poudre par la balance doseuse 8 qui y dépose la quantité de poudre que doit emporter la fibre 1.

La partie non captée de suspension aérosol dans l'enceinte 2 est aspirée en 9 jusqu'au cyclone 10. L'aspiration est obtenue grâce au ventilateur 16 qui aspire au travers du filtre 17. Le cyclone 10 récupère la poudre qui, par l'intermédiaire de la vanne-sas 11c, retourne au plateau tournant 11a. La poudre ainsi récupérée s'ajoute sur le plateau 11a à celle normalement déposée par la balance 8, augmentant la concentration de l'aérosol créé dans l'enceinte 2 via la trompe à air 4. La concentration augmente jusqu'à ce que la fibre 1 emporte autant de polymère que la balance doseuse 8 en dépose sur le plateau 11a. L'engorgement du plateau 11a signifie que la fibre ne peut emporter la quantité de poudre apportée à l'enceinte 2 par la balance doseuse 8.

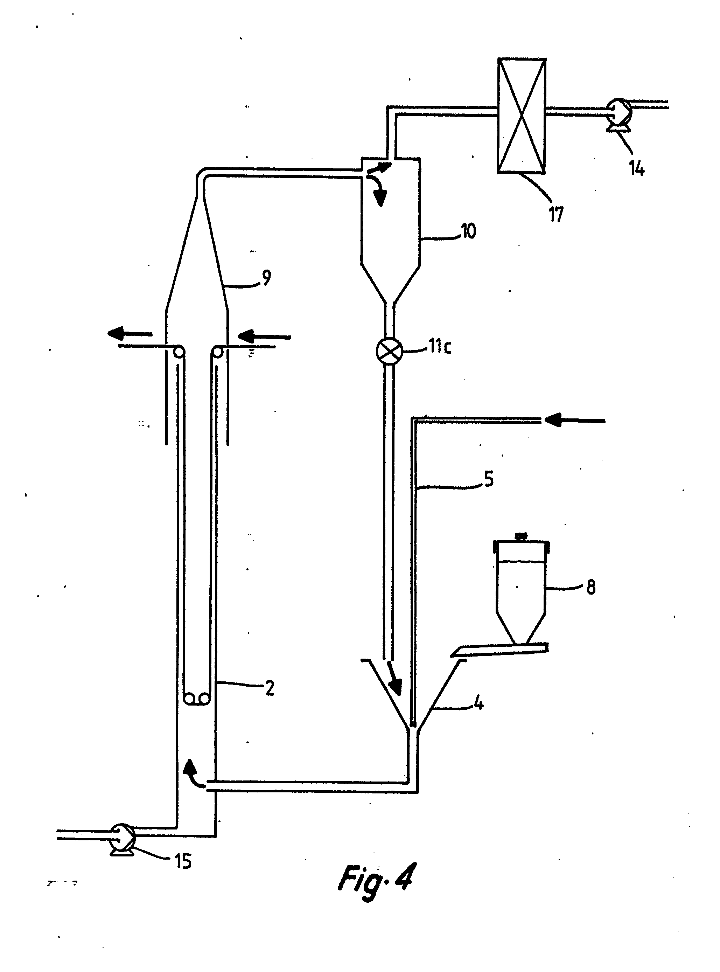

Dans la variante représentée sur la figure 4, la fibre 1 ou la nappe de fibres traverse l'enceinte d'imprégnation 2 qui est un tube vertical grâce à un jeu de renvois.

L'enceinte 2 est balayée par de l'air apporté par le ventilateur 15. La poudre de polymère est injectée sous forme d'aérosol à la base de l'enceinte 2 grâce à un injecteur pneumatique 4. Cet injecteur 4 est fait d'un entonnoir dans lequel la poudre de polymère est amenée par la balance doseuse 8. Une buse 5 souffle de l'air comprimé dans le fond de l'entonnoir, le venturi ainsi constitué agit comme une trompe à air ; la partie non captée de suspension aérosol dans l'enceinte 2 est aspirée par une hotte 9 qui coiffe l'enceinte 2 jusqu'à un cyclone 10. L'aspiration est obtenue grâce au ventilateur 16 qui aspire au travers d'un filtre 17. Le cyclone 10 récupère la poudre qui, par l'intermédiaire d'une vanne 11c, retourne à l'injecteur pneumatique 4. La poudre ainsi récupérée s'ajoute à celle normalement introduite par la balance doseuse 8 dans l'injecteur 4, augmentant la concentration de l'aérosol créé dans l'enceinte 2. La concentration augmente jusqu'à ce que la fibre 1 emporte autant de polymère que la balance doseuse 8 en délivre. L'engorgement de l'injecteur 4 signifie que la fibre 1 ne peut emporter la quantité de poudre apportée à l'enceinte 2 par la balance doseuse 8.

Le choix entre les différentes variantes de dispositif pour la mise en oeuvre du procédé sera dicté essentiellement par des critères économiques et techniques. La variante où l'enceinte d'imprégnation est une colonne verticale surmontée d'un élutriateur est d'une conception très simple et peu coûteuse ; elle constituera donc souvent un dispositif préféré. Toutefois, notamment lorsque la granulométrie du polymère sera très fine (inférieure à 30 micromètres), ou l'étendue de la gamme de granulométrie très large, pour éviter d'avoir recours à un élutriateur de trop grande dimension, on préfèrera les variantes utilisant un cyclone comme dispositif de séparation.

### Exemples d'utilisation du procédé

Le procédé selon l'invention, intégré dans une ligne de production a permis de faire des profilés rectangulaires d'une section de 15 X 5 mm (produits finis) et du ruban d'injection de 15 X 0,5 mm (semi-produits) à 15 X 1,2 mm.

L'alimentation en polymère de l'installation selon l'invention a varié selon les essais de 1 à 4 kg/h et la vitesse de passage des fibres de 0,3 à 7,7 m.mn$^{-1}$ en fonction du taux de renfort souhaité.

Les rubans disposés parallèlement dans un moule ont été moulés à la presse pour faire des plaques dans lesquelles les éprouvettes d'essai mécaniques sont découpées à la scie diamantée.

Les essais mécaniques en flexion ont été effectués en respect de la norme NF T 5100 soit directement sur les profilés, soit sur les éprouvettes découpées. Les fibres sont toujours disposées perpendiculairement aux appuis. Dans le cas de renforts transversaux, des éprouvettes découpées perpendiculairement au sens des fibres ont été testées.

Les exemples en question sont présentés sous forme de tableau.

| Polymère | | Fibre | | Conditions d'imprégnation | | Propriétés en flexion | |
|----------|--|-------|--|---------------------------|--|------------------------|--|
| Nature | Granulo- métrie $\mu m$ | Nature | Taux en volume % | Vitesse m mn$^{-1}$ | Débit polymère kg.h$^{-1}$ | Contr. max. MPa | Module MPa |
| Polyéthy- lène téré- phtalate | 100-250 | Verre E | 43 | 4.3 | 1 | 1000 | 31500 |
| Polypro- pylène | 50-100 | Verre E | 46 | 4.3 | 1 | 450 | 30000 |
| Polypro- pylène | 100-250 | Verre E | 30 | 4.3 | 4 | 250 | 18500 |
| Polyamide 6-6 | 100-250 | Verre E | 49 | 0.4 | 1 | 1000 | 34000 |
| Polyamide 6-6 | 100-250 | Verre E "bouclette" | 47 | 4.3 | 1 | 470 38 * | 27000 5000 * |
| Polyester insaturé avec charge minérale | 40-250 | Verre E | 40 | 3.2 | 3.3 | 700 | 29500 |
| Phénolique novolaque | < 40 | Verre E | 56 | 4.3 | 1 | 1400 | 38000 |
| Polyamide 6 | 10-30 | Verre E | 52.5 | 4.3 | 1 | 960 | 40500 |
| Polyamide 6-6 | 100-250 | Kevlar 49 | 50 | 4.3 | 1 | 570 | 41000 |
| Polyamide 6-6 | 100-250 | Carbone | 51 | 2.5 | 1 | 1300 | 90000 |
| Polyoxyde de phénylène | 50-100 | Verre E | 23 | 15 | 9 | 400 | 16000 |

* mesures effectuées dans le sens transversal aux fibres.

Il va de soi que la présente invention n'a été décrite qu'à titre purement explicatif et nullement limitatif et que toute modification, notamment au niveau des équivalences, pourra y être apportée sans sortir de son cadre.

15

REVENDICATIONS

1. Procédé d'imprégnation en continu de fibres de grande longueur de nature organique, minérale ou métallique par des produits polymériques à l'état solide pulvérulent en suspension dans un gaz, caractérisé en ce qu'il consiste à faire passer lesdites fibres en continu dans ladite suspension constituant un aérosol dont la concentration est adaptée automatiquement de façon à ce que, dans le même temps, les fibres emportent autant de polymère que l'enceinte en reçoit.

2. Procédé d'imprégnation selon la revendication 1, caractérisé en ce que l'adaptation de la concentration de l'aérosol est obtenue par le recyclage du polymère non capté par la fibre.

3. Procédé d'imprégnation selon la revendication 1 ou 2, caractérisé en ce que le milieu gazeux est de l'air.

4. Procédé d'imprégnation selon l'une des revendications 1, 2 ou 3, caractérisé en ce que les particules ou microparticules de produits polymériques pulvérulents ont une dimension pouvant aller jusqu'à 250 micromètres.

5. Installation mettant en oeuvre le procédé selon l'une quelconque des revendications 1 à 4, caractérisée en ce qu'elle comprend une enceinte (2) comportant les moyens d'admission (3,6) d'une suspension du type aérosol de polymères à partir d'un générateur d'aérosol (4) alimenté en air comprimé (5) et un moyen de circulation des fibres (1) dans cette enceinte, et des moyens pour collecter (9,9a,9b) les particules ou microparticules en excès et les recycler (4,11a) soit aux moyens d'admission de ces dernières, soit directement à l'enceinte (2).

6. Installation selon la revendication 5, caractérisée en ce que l'enceinte (2) affecte la forme d'un tube que les fibres (1) traversent au moins une fois sur toute sa longueur.

7. Installation selon l'une des revendications 4 ou 5, caractérisée en ce qu'elle comprend des moyens (14 ou en 3) pour agir sur la charge électrostatique des fibres (1) et/ou sur la charge des particules ou micro-particules.

**Fig.1**

13

8

10

9a

7

11b

11a

6

3

4

5

2

14

1

9b

*Fig. 2*

*Fig. 3*

0246167

Fig. 4

**Office européen des brevets**

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| X | US-A-3 589 333 (QUACKENBUSCH) <br> * Abrégé; colonne 2, lignes 11-35; figures 1,2 * | 1-7 | B 29 B 15/12 <br> B 05 D 7/20 |
| X | US-A-4 182 782 (SCHEIBER) <br> * Abrégé; colonne 3, lignes 42-59; figure 2 * | 1-7 | |
| X | FR-A-2 031 719 (SOCIETE DU VERRE TEXTILE) <br> * Page 1 - page 2, ligne 37; page 9, lignes 4-8; revendications 1-17; figures 2a,3-5 * | 1-7 | |
| X | EP-A-0 006 273 (METALLGESELLSCHAFT) <br> * Abrégé; page 2, lignes 1-25; page 5, ligne 16 - page 6; figure unique * | 1-7 | |

| DOMAINES TECHNIQUES RECHERCHES (Int. Cl.4) |
|---|
| B 29 B <br> B 29 C <br> B 05 D |

Le présent rapport de recherche a été établi pour toutes les revendications

| Lieu de la recherche | Date d'achèvement de la recherche | Examinateur |
|---|---|---|
| LA HAYE | 05-08-1987 | KUHN E.F.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82